# EUROPEAN PATENT SPECIFICATION

(11) **EP 1 835 206 B1**
(45) Date of publication and mention of the grant of the patent: **06.04.2011**
(21) Application number: 06425184.6
(22) Date of filing: 17.03.2006
(51) Int. Cl.: F16J 15/18, F16J 15/32, F16J 15/48, F16K 41/02, F16K 41/08

(54) **A functional device, such as an on-off valve, provided with sealing means**
Funktionsvorrichtung, wie Schaltventil mit Dichtungsanordnung
Dispositif fonctionnel, tel que vanne fonctionnant en mode tout ou rien, pourvue d'un dispositif d'étanchéité

(43) Date of publication of application: 19.09.2007
(73) Proprietor: Carrara S.p.A., 25030 Adro BS (IT)
(72) Inventor: Carrara, Sergio, 24067 Sarnico (Bergamo) (IT)
(74) Representative: Crippa, Paolo Ernesto

(56) References cited:
- DE-A1- 3 400 314
- DE-A1- 4 414 174
- DE-C- 965 545
- FR-A- 982 002

## Description

. The present invention relates to a functional device, such as a valve, a piston-cylinder system, or a rotatable shaft, provided with sealing means between a stem of the device, for example a rotatable or moving stem, and a wall of a chamber under pressure of the device, from which the stem protrudes.

. More in particular, the present invention relates to a valve having a control stem, for example connected to an handle for the manual opening/closing of the valve, provided with sealing means between the stem and the wall of the chamber under pressure from which the stem protrudes.

. Generally, a valve that can be manually actuated for opening or closing exhibits a chamber under pressure where the valve opening/closing device is housed.

. The opening/closing device is connected to a stem that protrudes from the chamber for being connected to a manually actuable handle.

. Sealing means must be provided between the stem and the wall of the opening through which the stem protrudes, to prevent the venting or the leaking of the fluid under pressure from the chamber.

. Generally, the sealing means consist of a set of piled sealing rings, fitted on the stem and housed in the gap between the stem and the opening wall.

. On the side facing the chamber, the sealing rings rest on a projection of the wall, whereas on the other side, that is, outside the chamber, they are pressed by a compression device, which in the jargon is called "gland".

. The rings are generally made of expanded graphite, having strong elastic deformation properties. The axial compression exerted by the gland causes a radial expansion of the rings towards the stem.

. The elastic action of the rings on the stem ensures the seal against the fluid venting or leaking.

. Experimental measures and theoretical considerations show that the top rings, that is, those close to the gland, are in a condition of strong compression and strong radial expansion, whereas the bottom rings, that is, those close to the wall projection, are in a condition of poor compression and poor radial expansion.

. Such uneven distribution of the compression is the cause of several disadvantages.

. In order to obtain a useful sealing action also by the bottom rings, it is necessary to provide high tightening loads of the gland bolts, while overloading the top rings.

. It has been found that over time, the elastic response of expanded graphite rings tends to decrease due to a sort of "habit" of the material. In other words, the prolonged state of compression the rings are subject to generates a re-arrangement of the lamellar structure of the material, so that it relaxes and loses the elastic characteristics thereof, thus nullifying the sealing action on the stem.

. Such relaxation is quicker when the compression state the material has been subject to is higher, and so the condition of high compression of the rings, and in particular of the top rings, is strongly undesired.

. Moreover, too high sealing action of the top rings on the stem causes a torque resistant to the stem rotation which causes a difficult controllability of the stem itself.

. Such disadvantages have been dealt with using very low density graphite rings to be installed with a controlled tightening of the gland bolts, or using trapezoidal section rings or using Belleville washers on the gland bolts.

. However, none of the solutions proposed so far solves the problems mentioned above, especially due to the fact that they try to oppose the effects of the material relaxation, which occurs in any case, without avoiding the occurrence of the phenomenon itself.

. Known solutions are disclosed, for example, in documents DE3400314 and DE3937956, the latter referring to a partly underground valve with a control stem intended for being rotated, which is sealingly mounted with a usual set of sealing rings with gland, provided with a system for using such sealing rings in said partly underground valve.

. A further solution is disclosed, for example, in document US 5,398,944, which refers to the field of oil pumps, wherein a stem is moving and sealingly mounted by sealing rings arranged in a conventional manner.

. An even further solution is disclosed in document US 2003/0052457, relating to a sealing system for steam turbines, particularly efficient only when there exists a high pressure that influences the ring.

. The object of the present invention is to provide a functional device with such sealing means as to ensure a better distribution of the strain state of the sealing rings, in all the operating conditions of the device.

. Such object is achieved by a device obtained according to claim 1. The dependent claims describe embodiment variations.

. The features and advantages of the functional device according to the present invention will appear more clearly from the following description, made by way of an indicative and non-limiting example with reference to the annexed figures, wherein:

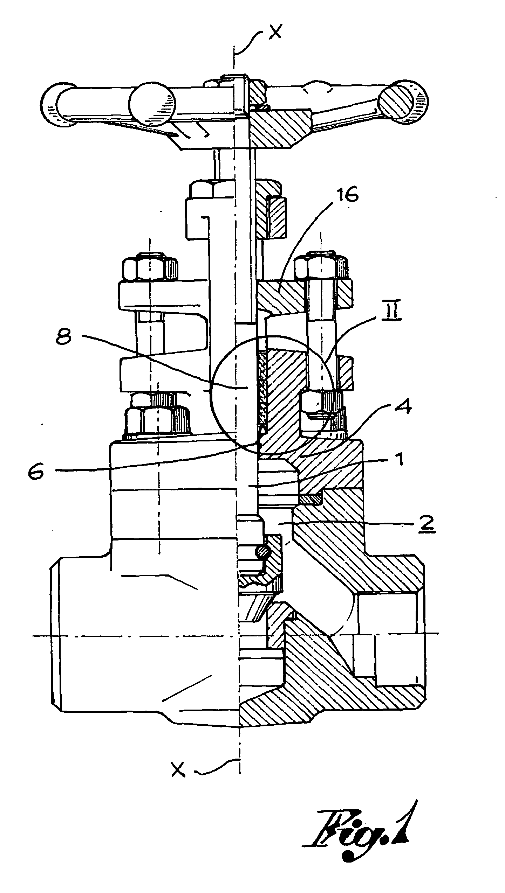

. - figure 1 shows a partly section view of an on-off valve comprising sealing means according to the present invention, in accordance with an embodiment variation;

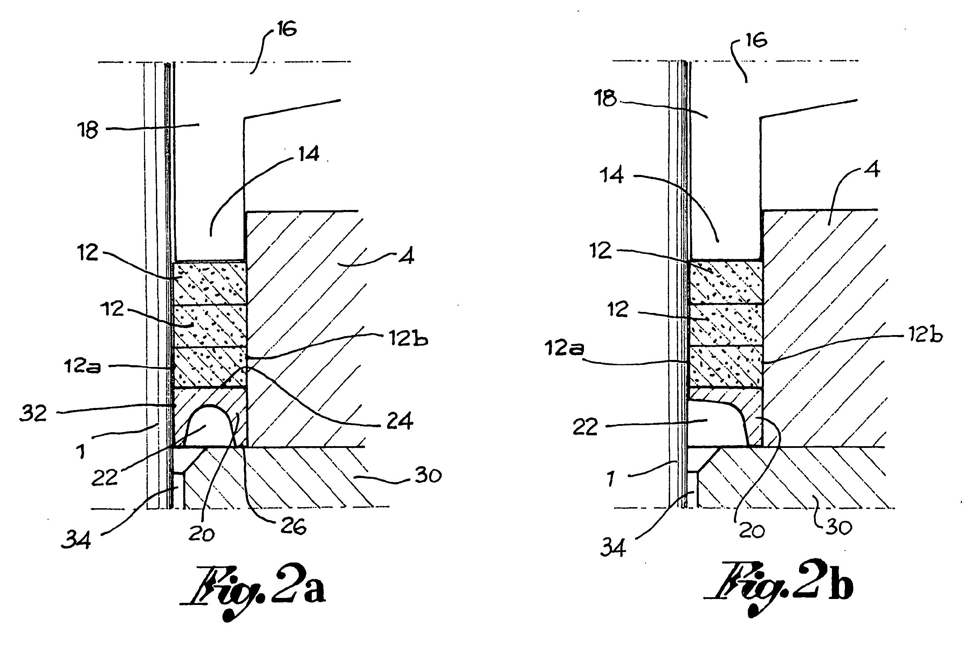

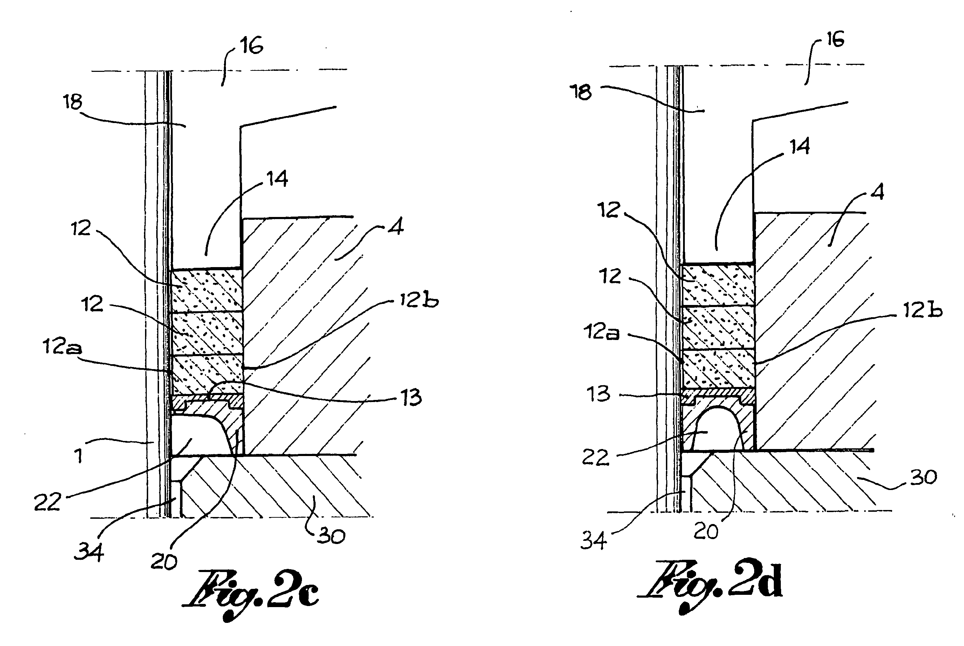

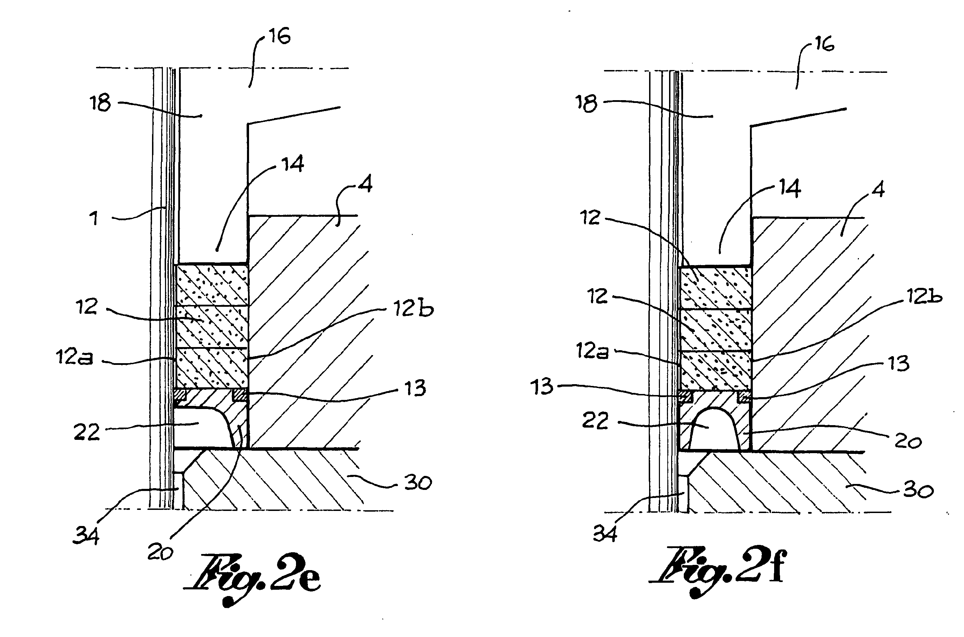

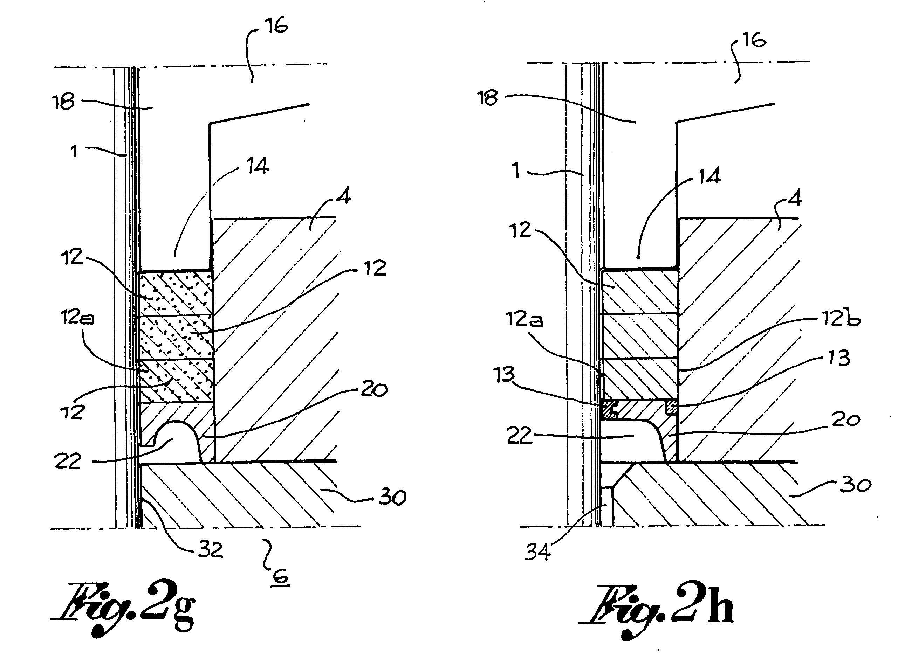

. - figures 2b, 2c, 2e and 2h show possible embodiments of sealing means according to the present invention, while figures 2a, 2d, 2f and 2g show a diagram of further embodiments of sealing means not part of the invention;

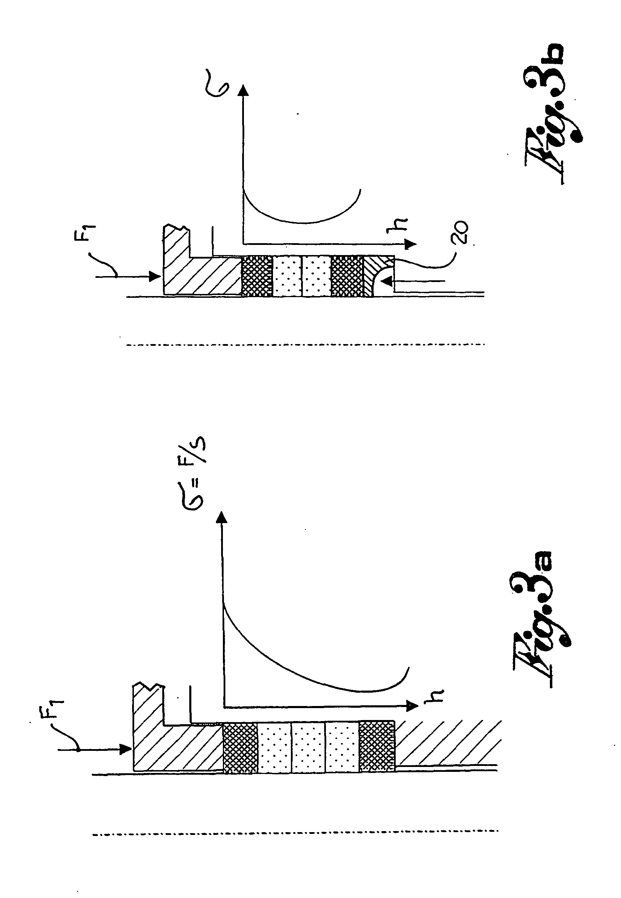

. - figure 3a shows a graph showing a diagram of distribution of the compression strain in conventional sealing means, and

. - figure 3b shows a graph showing an example of diagram of distribution of the compression strain in sealing means according to the present invention.

. With reference to the annexed figures, reference numeral 1 denotes a stem of a functional device.

. Said functional device is, for example, a valve or a cylinder-piston system, or said stem is a rotatable shaft of said functional device.

. Stem 1 exhibits a stem axis X-X, along which said stem exhibits prevailing extension.

. In the following description, with reference to the direction of said stem axis X-X, reference shall be made to an "axial" direction, meaning a direction parallel to said stem axis X-X, and to a "radial" direction meaning a direction laying on a plane perpendicular to said stem axis X-X.

. Moreover, for clarity of description, in the following description explicit reference is made to an on-off valve by way of an example.

. The valve exhibits a chamber 2 wherein there is a fluid under pressure, according to the use of the valve. In the case of an on-off valve of an extraction system, said fluid is a mixture of hydrocarbons, or in the case of an on-off valve of an oil-pressure system, it is oil.

. Chamber 2 of the valve is at least partly delimited by a wall 4 having an opening 6 towards the exterior of chamber 2.

. The valve is associable to an upstream duct and to a downstream duct and comprises an opening/closing device suitable for allowing/preventing the fluid flow from said upstream duct to said downstream duct.

. The opening/closing device is seated into chamber 2 and is operatively connected to stem 1 for manual actuation.

. Stem 1 therefore is at least partly seated in chamber 2 and protrudes outwards thereof crossing wall 4 at opening 6.

. Preferably, the valve comprises an actuating knob, accessible from the outside by an operator, for example a small ring, operatively connected to stem 1 for operating the opening/closing device.

. In particular, stem 1 comprises a sealing portion 8 arranged through said opening 6, defining a gap with the wall that delimits opening 6.

. The valve further comprises sealing means suitable for providing a seal to said fluid under pressure between said stem 1 and said wall 4 of chamber 2.

. The sealing means comprise at least one sealing ring 12 fitted on stem 1.

. Said sealing ring exhibits an inner radial surface 12a, axially facing stem 1, and an outer radial surface 12b, radially spaced and generally concentric to the inner radial surface 12a.

. To this end, a longitudinal plane is defined as containing the stem axis X-X and "longitudinal section" of the sealing ring is defined as the section of said ring determined on said longitudinal plane. Said longitudinal section generally is rectangular.

. The longitudinal section of the ring is radially determined by the traces on said longitudinal plane of the inner radial surface 12a and of the outer radial surface 12b of said ring. Moreover, the centre line of the longitudinal section of the ring is defined as the imaginary median line between the traces on said longitudinal plane of the inner radial surface 12a and of the outer radial surface 12b of said ring.

. Preferably, the sealing means comprise a plurality of sealing rings 12, axially piled and operatively connected to one another.

. With reference to the axial position taken by the sealing rings 12, rings 12 close to chamber 6 are indicated as "bottom" rings, and the rings close to the outer environment are indicated as "top" rings.

. Preferably, the sealing rings are arranged in the gap between the sealing portion 8 of stem 1 and the wall that delimits opening 6.

. The sealing rings 12 are made of a sealing material, such as graphite, having high elastic deformation properties.

. According to a preferred embodiment, said rings 12 comprise rings made of sintered graphite and annular graphite braids.

. Moreover, the sealing means comprise an abutment wall 14 suitable for forming an abutment for said sealing rings 12.

. For example, said valve comprises a flange 16 coupled to wall 4 outside chamber 2 6, for example by stud bolts. Flange 16 comprises an active portion 18 inserted into opening 6. Said active portion 18 forms said abutment wall 14 for rings 12.

. In other words, said flange 16 and said stud bolts form a gland device.

. In a preferred embodiment, ring 12 made as an annular braid is indirect abutment with the abutment wall 14.

. Said sealing means further comprise at least one ring 20 arranged so as to be directly influenced by the action of the fluid pressure into said chamber 2. Said ring 20 exhibits at least one expansion room 22 wherein the fluid pressure causes a thrust action of said ring 20 towards said sealing ring 12.

. According to a preferred embodiment, the ring 20 exhibits a top surface 24 in contact with the sealing ring 12 and a bottom surface 26, axially opposite the top surface 24, wherein the expansion room 22 opens.

. If said sealing means comprise a plurality of sealing rings, the sealing ring in contact with said ring 20 is called "first sealing ring".

. Furthermore, the expansion room 22 is annular and annularly uninterrupted.

. The ring 20 is structurally suitable for causing a thrust action towards the sealing ring 12. In other words, the ring 20 is formed so as to not absorb, for example by deformation thereof, the entire action of the fluid pressure but, opposing such deformation, it transmits at least part of such action to the sealing ring 12.

. In particular, the ring 20 exhibits a compression deformation that is less than the compression deformation of the sealing ring 12, strain conditions being equal, for example due to the material of which it is made.

. For example, the ring is made of steel, whereas the sealing element is made of graphite. In other words, the material of the ring exhibits a compression deformation which is less than the compression deformation of the material of which the sealing ring is made, strain conditions being equal.

. Said sealing means further comprise a bottom wall 30, inside chamber 2, at least partly radially protruding from wall 4 that delimits opening 6.

. The bottom wall 30 exhibits an end surface 32 that radially delimits it and is radially facing stem 1.

. The sealing ring 12 and the ring 20 are arranged between the abutment wall 14 and the bottom wall 30 and in particular, the ring 20 directly rests on the bottom wall 30.

. The expansion room 22 of the ring 20 is radially arranged, at least partly, between the end surface 32 of the bottom wall 30 and wall 4 that delimits opening 6.

. In other words, the expansion room 22 is concentric and arranged externally relative to the end surface 32 of the bottom wall 30.

. The bottom wall 30 exhibits an expansion duct 34 suitable for placing chamber 2 4 in fluid communication the expansion room 22 of the ring 20.

. In particular, the expansion duct 34 opens from the end surface 32 towards the expansion room 22.

. Preferably, moreover, the expansion room 22 exhibits a section which radially extends, at least mainly, beyond the centre line of the longitudinal section of the sealing ring 12.

. According to a preferred embodiment, the ring 20 further exhibits at least one annular seat obtained on said top surface 24 and said sealing means further comprise at least one secondary sealing ring 13, made of graphite, arranged in said annular seat of the ring 20.

. Preferably, said secondary sealing ring 13 exhibits an inner side surface which axially faces stem 1, closer to the outer stem surface as compared to the inner side surface of the ring 20. In other words, the inner side surface of the ring 20 is diametrically external relative to the inner side surface of the secondary sealing ring 13.

. According to a further embodiment, the secondary sealing ring 13 arranges between the ring 20 and stem 1, like an inside sheath (figure 2h).

. In the normal use of the valve, the sealing rings 12, piled and inserted in the gap between the stem and the wall of opening 6, are in compression between the abutment wall 14 of the gland device and the bottom wall 30.

. For clarity of description, let's assume that the ring is made of steel, that is, virtually indeformable by the fluid pressure action, whereas the sealing rings are made of expanded graphite and thus strongly axially compressible and radially expansible.

. The fluid present into chamber 2 of the valve exhibits a pressure due to the operating conditions of the system where the valve is installed.

. The fluid, for example through the expansion duct 34, fills the expansion room 22 of the ring 20 and acts on such ring with a thrust action, irrespective of the shape of the expansion room 22.

. As said, the ring transmits a thrust action to the sealing ring 12 in abutment with the ring itself.

. The resulting thrust action promotes a strong compression of the bottom sealing rings. At the same time, since the expansion room 22 exhibits a prevailing section extending beyond the centre line of the section of the sealing ring, the ring 20 strains the first sealing ring 12 in the proximity of the outer radial surface 12b, relieving the ring compression against wall 4 that delimits opening 6 and increasing the compression towards the stem.

. Innovatively, the device according to the present invention is provided with such sealing means as to ensure a better distribution of the strain state of the sealing rings.

. Advantageously, moreover, the provided sealing means allow achieving a high compression of the bottom rings too, usually little strained. Such distribution of the strains corresponds to a better use of the sealing rings and consequently, to the possibility of reducing the tightening loads on the gland device (figures 3a and 3b).

. Experimental measurements made by the Applicant have shown that the seal can be obtained using a pre-load through stud bolts which on the average is 50% less than in conventional systems.

. According to a further advantageous aspect, the better use of the sealing rings allows the extension of the relaxation times of the ring material, thus ensuring long working life.

. Such measurements have shown that the decrease of the torque resistant to the stem rotation after a large number of manoeuvres, which is an index of the material relaxation, has been measured as less of only 20% than the resistant torque measured at the beginning of the test.

. According to an even further advantageous aspect, the more even distribution of the strain of the rings causes a lower resistant action on the stem mobility. For example, a lower torque that the operator must exert on the small ring of a valve to open or close it, or a lower resistance to the piston movement of a cylinder-piston, or a lower resistant torque to the rotation of a shaft, have been measured.

. Such measurements have shown that the resistant torque to the stem rotation is on the average less by 30% to 50% than the resistant torque that can be measured in a conventional system.

. Advantageously, moreover, the thrust action of the ring on the sealing ring is proportional to pressure, and therefore a self-adjusting effect is obtained, based on which greater pressures correspond to a higher ring strain, irrespective of the pre-load initially assigned by the gland device.

. In fact, the experimental measurements have confirmed that the above advantages are even stronger when the valve dimensions are larger and when the fluid pressure is higher.

. According to a further advantageous aspect, the secondary sealing ring, made of graphite, when arranged between the ring and the stem, allows avoiding the occurrence of scratches on the stem.

. A man skilled in the art can make changes and adjustments to the device described above in order to meet specific and incidental needs.

. For example, according to an embodiment variation, said bottom containment wall 4 exhibits an expansion duct 34 suitable for placing said chamber 6 in fluid communication with said expansion room 22 of the ring 20.

. The scope of protection comprises the embodiments as defined by the following claims.

## Claims

1. A functional device comprising:
- a containment wall (4) suitable for defining a chamber (2) for containing a fluid under pressure, wherein said containment wall (4) has at least one opening (6) for the connection to the environment outside said chamber;
- a stem (1) at least partly housed in said chamber (2), having a stem axis (X-X), wherein said stem comprises a sealing portion (8) arranged through said opening (6);
- sealing means suitable for providing a seal to said fluid under pressure between said stem and said chamber wall;
wherein said sealing means comprise
- at least one sealing ring (12) inserted on said stem (1), in an operating configuration of the device said sealing ring (12) being radially compressed against said stem (1) for forming the seal;
- an abutment wall (14) suitable for forming an axial abutment for said sealing ring (12);
wherein said sealing means further comprise at least one ring (20) arranged so as to be directly influenced by the
action of the fluid pressure into said chamber, wherein said ring has at least one expansion room (22) wherein the fluid pressure causes a thrust action of said ring (20) towards said sealing ring (12);
and wherein said sealing means further comprise a bottom wall (30), inside said chamber (2), at least partly radially protruding from the containment wall (4) that delimits said opening (6), said sealing ring (12) and said ring (20) being arranged between said abutment wall (14) and said bottom wall (30);
and wherein said ring (20) rests on said bottom wall (30);
and wherein said bottom wall (30) has an end surface (32) that radially delimits said bottom wall (30), said end surface being axially facing said stem (1);
and wherein said bottom wall (30) has an expansion duct (34) suitable for placing said chamber (2) in fluid communication with said expansion room (22) of the ring (20);
said device being **characterized in that**
the expansion room (22) is annular and annularly uninterrupted, and extends radially from the surface of the stem (1) and is radially separated from the containment wall (4) by the external lateral wall of the ring (20), the ring (20) being only formed by said external lateral wall and a radial wall.

2. A device according to claim 1, wherein said ring (20) has a top surface (24) in contact with said sealing ring (12) and a bottom surface (26), axially opposite said top surface (24), wherein said expansion room (22) opens.

3. A device according to any one of the preceding claims, wherein said containment wall (4) has an expansion duct (34).

4. A device according to claim 1, wherein said expansion duct (34) opens from said end surface (32) towards said expansion room (22).

5. A device according to any one of the previous claims, wherein said expansion room (22) has a longitudinal section with extends, at least mainly, beyond the centre line of the longitudinal section of said sealing ring (12).

6. A device according to any one of the preceding claims, wherein said ring (20) is suitable to have a compression deformation which is less than the compression deformation of said sealing ring (12), strain conditions being equal.

7. A device according to claim 6, wherein said sealing ring (12) is made of graphite.

8. A device according to claim 6 or 7, wherein said ring (20) is made of steel.

9. A device according to any one of the previous claims, wherein said sealing means (12) comprise a plurality of piled sealing rings (12) arranged in the gap between said stem (1) and the wall that delimits said opening.

10. A device according to claim 9, wherein at least one of said sealing rings (12) is shaped as a braid.

11. A device according to any one of the previous claims, wherein said ring (20) further has at least one annular seat obtained on said top surface (24).

12. A device according to claim 11, wherein said sealing means further comprise at least one secondary sealing ring (13) arranged in said annular seat.

13. A device according to claim 12, wherein said secondary sealing ring (13) is made of graphite.

14. A device according to any one of the previous claims, wherein said device is a fluid on-off valve wherein said stem (1) is the valve control stem for opening/closing said valve.

15. A device according to any one of claims 1 to 13, wherein said device is a cylinder-piston system, said stem (1) being the piston stem.

16. A device according to any one of claims 1 to 13, wherein said stem (1) is a rotatable shaft.

## Patentansprüche

1. Funktionsvorrichtung umfassend:
- eine Umgrenzungswand (4), die zum Bilden einer Kammer (2) zur Aufnahme eines unter Druck stehenden Fluids geeignet ist, wobei die Umgrenzungswand (4) wenigstens eine Öffnung (6) für die Verbindung mit der Außenumgebung der Kammer aufweist,
- einen Schaft (1), der wenigstens teilweise in der Kammer (2) aufgenommen ist und eine Schaftachse (X-X) aufweist, wobei der Schaft einen Dichtungsabschnitt (8) umfasst, der durch die Öffnung (6) hindurch verlaufend angeordnet ist,
- Dichtungsmittel, die geeignet sind, eine Abdichtung für das unter Druck stehende Fluid zwischen dem Schaft und der Kammerwand bereitzustellen,
wobei die Dichtungsmittel umfassen
- wenigstens einen Dichtungsring (12), der auf den Schaft (1) aufgesetzt ist, wobei in einer Arbeitsstellung der Vorrichtung der Dichtungsring (12) radial gegen den Schaft (1) zum Bilden der Abdichtung gepresst ist,
- eine Anlagewand (14), die zum Bilden einer Axialanlage für den Dichtungsring (12) geeignet ist,
wobei die Dichtungsmittel ferner wenigstens einen Ring (20) umfassen, der derart angeordnet ist, dass er unmittelbar durch die Wirkung des Fluiddrucks in der Kammer beaufschlagt wird, wobei der Ring wenigstens eine Expansionskammer (22) aufweist, wobei der Fluiddruck eine Kraftbeaufschlagung des Rings (22) zu dem Dichtungsring (12) hin hervorruft,
und wobei die Dichtungsmittel ferner eine Bodenwand (30) in der Kammer (2) umfassen, die wenigstens teilweise von der Umgrenzungswand (4), die die Öffnung (6) umgrenzt, radial vorragt, wobei der Dichtungsring (12) und der Ring (20) zwischen der Anlagewand (14) und der Bodenwand (30) angeordnet sind,
und wobei der Ring (20) an der Bodenwand (30) anliegt, und wobei die Bodenwand (30) eine Endfläche (32) aufweist, die die Bodenwand (30) radial begrenzt, wobei die Endfläche dem Schaft (1) axial zugewandt ist,
und wobei die Bodenwand (30) einen Expansionskanal (34) aufweist, der zum Verbinden der Kammer (2) mit der Expansionskammer (22) des Rings (20) in Flüssigkeitsverbindung geeignet ist,
**dadurch gekennzeichnet,**
**dass** die Expansionskammer (22) ringförmig und ringförmig ununterbrochen ausgebildet ist und sich von der Fläche des Schafts (1) radial erstreckt und von der Umgrenzungswand (4) durch die externe Seitenwand des Rings (20) radial getrennt ist, wobei der Ring (20) nur durch die externe Seitenwand und eine Radialwand gebildet ist.

2. Vorrichtung gemäß Anspruch 1, wobei der Ring (20) eine mit dem Dichtungsring (12) in Kontakt stehende obere Fläche (24) und eine Bodenfläche (26) aufweist, die der oberen Fläche (24) axial entgegengesetzt liegt und zu der Expansionskammer (22) offen ist.

3. Vorrichtung gemäß irgend einem der vorangehenden Ansprüche, wobei die Umgrenzungswand (4) einen Expansionskanal (34) aufweist.

4. Vorrichtung gemäß Anspruch 1, wobei der Expansionskanal (34) von der Endfläche (32) zu der Expansionskammer (22) offen ist.

5. Vorrichtung gemäß irgend einem der vorangehenden Ansprüche, wobei die Expansionskammer (22) einen Längsquerschnitt aufweist, der sich wenigstens vorwiegend über die Mittellinie des Längsquerschnitts des Dichtungsrings (12) hinaus erstreckt.

6. Vorrichtung gemäß irgend einem der vorangehenden Ansprüche, wobei der Ring (20) geeignet ist, eine Druckverformung aufzuweisen, die geringer als die Druckverformung des Dichtungsrings (12) bei gleichen Spannungszuständen ist.

7. Vorrichtung gemäß Anspruch 6, wobei der Dichtungsring (12) aus Graphit hergestellt ist.

8. Vorrichtung gemäß Anspruch 6 oder 7, wobei der Ring (20) aus Stahl hergestellt ist.

9. Vorrichtung gemäß irgend einem der vorangehenden Ansprüche, wobei die Dichtungsmittel (12) eine Mehrzahl von aufeinandergesetzten Dichtungsringen (12) umfassen, die in dem Spalt zwischen dem Schaft (1) und der Wand, die die Öffnung begrenzt, angeordnet sind.

10. Vorrichtung gemäß Anspruch 9, wobei wenigstens einer der Dichtungsringe (12) als Geflecht ausgebildet ist.

11. Vorrichtung gemäß irgend einem der vorangehenden Ansprüche, wobei der Ring (20) ferner wenigstens einen ringförmigen Sitz, der in der oberen Fläche (24) vorgesehen ist, aufweist.

12. Vorrichtung gemäß Anspruch 11, wobei die Dichtungsmittel ferner wenigstens einen Sekundärdichtungsring (13), der in dem ringförmigen Sitz angeordnet ist, umfassen.

13. Vorrichtung gemäß Anspruch 12, wobei der Sekundärdichtungsring (12) aus Graphit hergestellt ist.

14. Vorrichtung gemäß irgend einem der vorangehenden Ansprüche, wobei die Vorrichtung ein Flüssigkeitsschaltventil ist, wobei der Schaft (1) die Ventilsteuerspindel zum Öffnen/Schließen des Ventils darstellt.

15. Vorrichtung gemäß irgend einem der Ansprüche 1 bis 13, wobei die Vorrichtung ein Zylinder-Kolben-System ist, wobei der Schaft (1) ein Kolbenschaft ist.

16. Vorrichtung gemäß irgend einem der Ansprüche 1 bis 13, wobei der Schaft (1) eine drehbare Welle ist.

## Revendications

1. Dispositif fonctionnel comprenant:
- une paroi de confinement (4) appropriée pour définir une chambre (2) destinée à contenir un fluide sous pression, où ladite paroi de confinement (4) présente au moins une ouverture (6) pour le raccordement à l'environnement à l'extérieur de ladite chambre;
- une tige (1) au moins partiellement logée dans ladite chambre (2), ayant un axe de tige (X-X), dans lequel ladite tige comprend une portion d'obturation (8) agencée à travers ladite ouverture (6);
- des moyens d'obturation appropriés pour former un joint vis-à-vis dudit fluide sous pression entre ladite tige et ladite paroi de chambre;
dans lequel lesdits moyens d'obturation comprennent
- au moins une bague d'obturation (12) insérée sur ladite tige (1), où ladite bague d'obturation (12) est radialement comprimée contre ladite tige (1) pour former le joint dans une configuration opérationnelle du dispositif;
- une paroi de butée (14) appropriée pour former une butée axiale pour ladite bague d'obturation (12);
dans lequel lesdits moyens d'obturation comprennent en outre au moins une bague (20) agencée de façon à être directement influencée par l'action de la pression de fluide dans ladite chambre, dans lequel ladite bague a au moins une chambre de détente (22) dans lequel la pression de fluide provoque une action de poussée de ladite bague (20) vers ladite bague d'obturation (12);
et dans lequel lesdits moyens d'obturation comprennent en outre une paroi de fond (30), à l'intérieur de ladite chambre (2), faisant saillie au moins partiellement radialement à partir de la paroi de confinement (4) qui délimite ladite ouverture (6), ladite bague d'obturation (12) et ladite bague (20) étant agencées entre ladite paroi de butée (14) et ladite paroi de fond (30);
et dans lequel ladite bague (20) repose sur ladite paroi de fond (30);
et dans lequel ladite paroi de fond (30) comporte une surface d'extrémité (32) qui délimite radialement ladite paroi de fond (30), ladite surface d'extrémité faisant axialement face à ladite tige (1);
et dans lequel ladite paroi de fond (30) présente un conduit de détente (34) approprié pour placer ladite chambre (2) en communication fluidique avec ladite chambre de détente (22) de la bague (20);
ledit dispositif étant **caractérisé en ce que** la chambre de détente (22) est annulaire et ininterrompue de façon annulaire, et s'étend radialement à partir de la surface de la tige (1) et est radialement séparée de la paroi de confinement (4) par la paroi latérale externe de la bague (20), la bague (20) étant uniquement formée par ladite paroi latérale externe et une paroi radiale.

2. Dispositif selon la revendication 1, dans lequel ladite bague (20) comporte une surface supérieure (24) en contact avec ladite bague d'obturation (12) et une surface inférieure (26), axialement opposée à ladite surface supérieure (24), où ladite chambre de détente (22) s'ouvre.

3. Dispositif selon l'une quelconque des revendications précédentes, dans lequel ladite paroi de confinement (4) comporte un conduit de détente (34).

4. Dispositif selon la revendication 1, dans lequel ledit conduit de détente (34) s'ouvre à partir de ladite surface d'extrémité (32) vers ladite chambre de détente (22).

5. Dispositif selon l'une quelconque des revendications précédentes, dans lequel ladite chambre de détente (22) présente une section longitudinale qui s'étend, au moins principalement, au-delà de la ligne centrale de la section longitudinale de ladite bague d'obturation (12).

6. Dispositif selon l'une quelconque des revendications précédentes, dans lequel ladite bague (20) est appropriée pour avoir une déformation par compression qui est inférieure à la déformation par compression de ladite bague d'obturation (12), à conditions d'effort égales.

7. Dispositif selon la revendication 6, dans lequel ladite bague d'obturation (12) est constituée de graphite.

8. Dispositif selon la revendication 6 ou 7, dans lequel ladite bague (20) est constituée d'acier.

9. Dispositif selon l'une quelconque des revendications précédentes, dans lequel lesdits moyens d'obturation (12) comprennent une pluralité de bagues d'obturation (12) empilées agencées dans l'espace situé entre ladite tige (1) et la paroi qui délimite ladite ouverture.

10. Dispositif selon la revendication 9, dans lequel au moins l'une desdites bagues d'obturation (12) a la forme d'une tresse.

11. Dispositif selon l'une quelconque des revendications précédentes, dans lequel ladite bague (20) comprend en outre un siège annulaire obtenu sur ladite surface supérieure (24).

12. Dispositif selon la revendication 11, dans lequel lesdits moyens d'obturation comprennent en outre au moins une bague d'obturation secondaire (13) agencée dans ledit siège annulaire.

13. Dispositif selon la revendication 12, dans lequel ladite bague d'obturation secondaire (13) est constituée de graphite.

14. Dispositif selon l'une quelconque des revendications précédentes, dans lequel ledit dispositif est une soupape tout ou rien pour fluide, où ladite tige (1) est la tige de commande de soupape permettant l'ouverture/la fermeture de ladite soupape.

15. Dispositif selon l'une quelconque des revendications 1 à 13, dans lequel ledit dispositif est un système de cylindre-piston, ladite tige (1) étant la tige de piston.

16. Dispositif selon l'une quelconque des revendications 1 à 13, dans lequel ladite tige (1) est un arbre rotatif.
